# EUROPEAN PATENT APPLICATION

(11) **EP 4 819 098 A1**
(43) Date of publication of application: **07.10.2026**
(21) Application number: 24897138.4
(22) Date of filing: 21.10.2024
(51) Int. Cl.: G08G 1/16, B60W 30/095, B60W 60/00, G08G 1/00

(54) **AUTOMATIC DRIVING CONTROL DEVICE AND AUTOMATIC DRIVING CONTROL METHOD**

(30) Priority: 29.11.2023 JP 2023202047
(71) Applicant: DENSO CORPORATION, Kariya-city, Aichi-pref. 448-8661 (JP)
(72) Inventor: NISHINO Haruna, Kariya-city, Aichi-pref., 448-8661 (JP); KOBAYASHI Mitsuyuki, Kariya-city, Aichi-pref., 448-8661 (JP); IZUMI Kazuki, Kariya-city, Aichi-pref., 448-8661 (JP)
(74) Representative: Winter, Brandl - Partnerschaft mbB
(86) International application number: PCT/JP2024/037358
(87) International publication number: WO 2025/115448

(57) **Abstract**

An automated driving ECU functions as an automated driving control unit and causes a host vehicle to travel under autonomous traveling control. The automated driving ECU recognizes an emergency vehicle approaching the host vehicle. If approach of the emergency vehicle is recognized, the automated driving ECU then controls behavior of the host vehicle so as to avoid the emergency vehicle.

## Description

### CROSS-REFERENCES TO RELATED APPLICATIONS

This application is based on Patent Application No. 2023-202047 filed in Japan on November 29, 2023, and the contents of the basic application are incorporated herein by reference in its entirety.

### TECHNICAL FIELD

The disclosure by this specification relates to an automated driving control technology for autonomous traveling of a host vehicle.

### BACKGROUND ART

Patent literature 1 discloses a blind spot vehicle sound detection system able to detect a direction of a different vehicle in an obstacle blind spot.

### PRIOR ART LITERATURE

### PATENT LITERATURE

Patent literature 1: JP 2012-146149A

### SUMMARY OF THE INVENTION

The inventors of the present disclosure have arrived at an idea of using the different vehicle detection technology as in Patent literature 1 to recognize an emergency vehicle. In particular, responding to an emergency vehicle presence situation can be an issue in an automated driving vehicle traveling under the autonomous traveling control. Specifically, there is concern that behavior of the automated driving vehicle would interfere with the emergency vehicle.

It is an object of the present disclosure to provide an automated driving control device and an automated driving control method that can attain automated driving that hardly exerts an influence on travelling of an emergency vehicle.

One disclosed aspect for achieving the above object is an automated driving control device enabling a host vehicle to travel under an autonomous traveling control, the automated driving control device comprising: a vehicle-external recognition unit that recognizes an emergency vehicle approaching the host vehicle; and a behavior control unit that controls behavior of the host vehicle so as to avoid the emergency vehicle when approach of the emergency vehicle is recognized.

Further, one disclosed aspect is an automated driving control device enabling a host vehicle to travel under an autonomous traveling control, the automated driving control device comprising: a vehicle-external recognition unit that recognizes an emergency vehicle approaching the host vehicle; and a behavior control unit that, when approach of the emergency vehicle is recognized, executes at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.

Further, one disclosed aspect is an automated driving control method enabling a host vehicle to travel under an autonomous traveling control, the method comprising a process executed by at least one processing unit, the process including steps of: recognizing an emergency vehicle approaching the host vehicle; and controlling behavior of the host vehicle so as to avoid the emergency vehicle when approach of the emergency vehicle is recognized.

Further, one disclosed aspect is an automated driving control method enabling a host vehicle to travel under an autonomous traveling control, the method comprising a process executed by at least one processing unit, the process including steps of: recognizing an emergency vehicle approaching the host vehicle; and when approach of the emergency vehicle is recognized, executing at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.

In these aspects, when the emergency vehicle is recognized, the behavior of the host vehicle is controlled to avoid the emergency vehicle. Because of this, a situation where the host vehicle traveling under autonomous traveling control becomes an obstacle to the emergency vehicle may hardly happen. As a result, it is possible to attain the automated driving that hardly exerts an influence on travelling of the emergency vehicle.

Reference numerals in parentheses in the claims, etc., merely indicate examples of correspondence relationships with concrete configurations in the below-described embodiments and do not limit the technical scopes. Claims are combinable to extents that the combination is not infeasible in particular, even if such a combination is not explicitly described in the section "claims",

### BRIEF DESCRIPTION OF THE DRAWING

FIG. 1 is a diagram showing an overall view of an in-vehicle network including an automated driving ECU according to one embodiment of the present disclosure.
FIG. 2 is a block diagram showing details of the automated driving ECU together with related configurations.
FIG. 3 is a flowchart showing details of a vehicle-external sound recognition process executed by the automated driving ECU.
FIG. 4 is a flowchart showing details of an emergency vehicle avoidance process executed by the automated driving ECU together with FIGS. 5 and 6.
FIG. 5 is a flowchart showing details of the emergency vehicle avoidance process together with FIGS 4 and 6.
FIG. 6 is a flowchart shows details of the emergency vehicle avoidance process together with FIGS. 4 and 5.
FIG. 7 is a flowchart showing details of an avoidance continuation process executed by the automated driving ECU.
FIG. 8 is a flowchart showing details of an emergency information notification process executed by the automated driving ECU.
FIG. 9 is a flowchart showing details of an abnormal vehicle avoidance process executed by the automated driving ECU.
FIG. 10 is a flowchart showing details of a parking monitoring process executed by the automated driving ECU.

### EMBODIMENTS FOR CARRYING OUT THE INVENTION

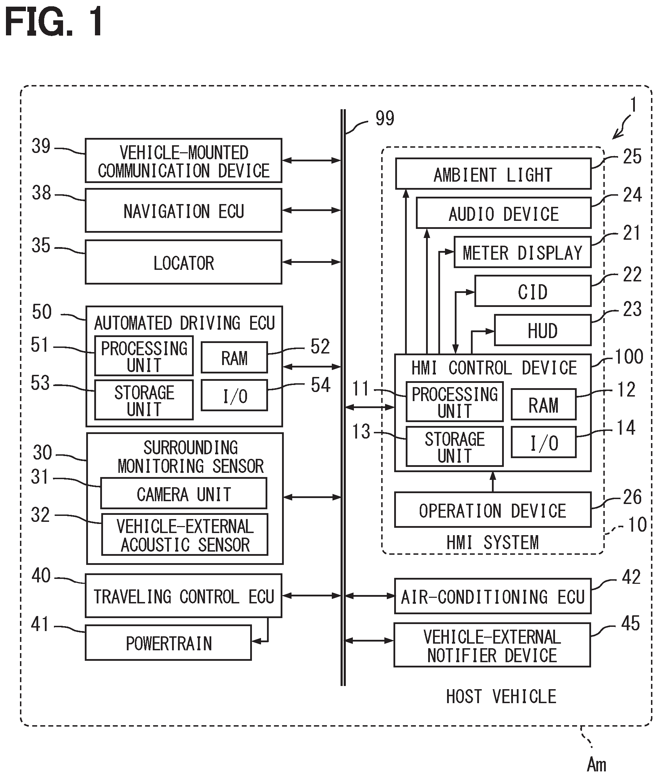

Functions of an automated driving control device according to one embodiment of the present disclosure are implemented by an automated driving ECU (Electronic Control Unit) 50 shown in FIG. 1. The automated driving ECU 50 is mounted to a vehicle (hereinafter referred to as host vehicle Am). The host vehicle Am mounted with the automated driving ECU 50 is an automated driving vehicle or an autonomous traveling vehicle equipped with an automated driving function. Driving automation levels in the present disclosure are based on standards defined by U.S. A. Society of Automotive Engineers. In the present disclosure, "autonomous travelling control" refers to the autonomous traveling control of driving automation level 3 or higher by the automated driving ECU 50.

During an automated traveling time period where the host vehicle Am travels under the autonomous traveling control by the automated driving ECU 50, a driver may be permitted to do prescribed specific acts (hereinafter, called second tasks) other than driving. During the automated traveling time period under the driving automation level 3, the driver is legally permitted to do the second task until the automated driving ECU 50 issues a driving takeover request in cooperation with an HMI (Human Machine Interface) control device 100. Supposed examples of the second tasks include watching entertainment contents such as video, operating a device such as smartphone, and eating.

The automated driving ECU 50 is communicably connected to a communication bus 99 of the in-vehicle network 1 mounted to the host vehicle Am. Connected to the communication bus 99 are a surrounding monitoring sensor 30, a locator 35, a navigation ECU 38, an vehicle-mounted communication device 39, a traveling control ECU 40, an air conditioning ECU 42, a vehicle-external notifier device 45, and an HMI control device 100. These nodes connected to the communication bus 99 are communicable with each other. Among these ECUs, etc., specific nodes may have direct electrical connection therebetween and may be communicable with each other not via the communication bus 99.

The surrounding monitoring sensor 30 is an autonomous sensor that is mounted to the host vehicle Am and monitors an environment around the host vehicle Am. The surrounding monitoring sensor 30 is capable of detecting a moving object and a stationary object in a detection range around the host vehicle. The surrounding monitoring sensor 30 provides detection information on an object around the host vehicle to the automated driving ECU 50, etc. The surrounding monitoring sensor 30 includes a camera unit 31 and a vehicle-external acoustic sensor 32. The surrounding monitoring sensor 30 may further include a millimeter wave radar, a lidar, and a sonar.

The camera unit 31 includes a front camera module, a rear camera module, a left-side camera module, and a right-side camera module, etc. The camera unit 31 can image an area all around the host vehicle Am by having multiple camera modules. The camera unit 31 outputs image data captured by each camera module or analysis information of the image data to the communication bus 99 as detection information.

The vehicle-external acoustic sensor 32 includes, as its main configuration, a microphone element for converting sound into an electrical signal. The microphone element functions as a condenser microphone that outputs an electrical signal representing a capacitance change due to sound pressure vibrating a thin vibration membrane. A Micro Electro Mechanical Systems (MEMS) microphone and the like are usable as microphone elements. The vehicle-external acoustic sensor 32 may be a piezoelectric microphone configuration using a piezoelectric sensor instead of a condenser microphone. The piezoelectric sensor converts sound into an electronic signal by means of a piezoelectric element. The vehicle-external acoustic sensor 32 is held by an exterior structure of the host vehicle Am in a position in which a sound-collecting surface of a microphone element or the like is directed toward the exterior structure of the host vehicle Am. Multiple vehicle-external acoustic sensors 32 are arranged to a front side, a rear side, a right side, a left side, and a ceiling of the host vehicle Am. The vehicle-external acoustic sensors 32 arranged to various positions are able to detect incoming sound from all around the host vehicle Am. The vehicle-external acoustic sensors 32 output sound data or sound data analysis information generated by each microphone element to the communication bus 99 as detection information.

The locator 35 is a configuration including a GNSS (Global Navigation Satellite System) receiver and an inertia sensor. The locator 35 successively executes positioning the host vehicle Am including a host vehicle location and a heading direction by combining the positioning signals received from multiple positioning satellites by the GNSS receiver, a measurement result of the inertia sensor, and vehicle speed information which is output to the communication bus 99. The locator 35 successively outputs the location information and the direction information of the host vehicle Am based on the positioning result to the communication bus 99 as locator information.

The locator 35 further includes a map database that stores map data. The map database includes, as its main configuration, a storage medium of a large capacity storing a number of 3D map data and 2D map data. The 3D map data are so-called HD (High Definition) maps, which contain road information necessary for automated driving. Specifically, the 3D map data includes information on a 3D shape of a road and detailed information on each lane. The locator 35 can update the 3D map data and the 2D map data to the latest information via the vehicle-mounted communication device 39 performing communication with an outside of the vehicle. The locator 35 reads the map data around the current location from the map database and provides it to the automated driving ECU 50, etc. together with the locator information.

The navigation ECU 38 acquires information on a destination designated by an occupant such as the driver or the like, based on operation information acquired from the HMI control device 100. The navigation ECU 38 acquires the host vehicle location and direction information from the locator 35 and sets a route from the current position to the destination. The navigation ECU 38 provides route information indicating the set route to the destination to the automated driving ECU 50, the HMI control device 100, etc. The navigation ECU 38, in cooperation with the HMI system 10 described below, notifies the driver of route guidance to the destination such as a traveling direction of the host vehicle Am at an intersection, a junction point, etc., by combining screen display, voice message, etc.

A user terminal such as a smartphone and a tablet may be connected to the in-vehicle network 1 or the HMI control device 100. Such a user terminal may provide information on the host vehicle location, the direction information, and the map data to the automated driving ECU 50, etc., in place of the locator 35. Furthermore, the user terminal may provide the automated driving ECU 50, HMI control device 100, etc., with the information on the route to the destination, in place of the navigation ECU 38. The user terminal may also execute playback of video content, etc., in place the below described HMI system 10 or together with the HMI system 10.

The vehicle-mounted communication device 39 is a vehicle-external communication device mounted to the host vehicle Am. The vehicle-mounted communication device 39 functions as a V2X (Vehicle to Everything) communication device. The vehicle-mounted communication device 39 transmits and receive information via wireless communication to and from roadside equipment installed on the roadside. As an example, the vehicle-mounted communication device 39 receives traffic congestion information and traffic control information, etc. from the roadside equipment. The traffic congestion information and the traffic control information are, for example, VICS (registered trademark) information. The vehicle-mounted communication device 39 may further receive traffic signal information indicating lighting patterns of traffic signals, as well as detection information on stopped vehicles, parked vehicles, pedestrians, and cyclists, etc., from the roadside equipment. The vehicle-mounted communication device 39 provides the received traffic congestion information, the traffic control information, the traffic signal information, and the detection information to the navigation ECU 38, the automated driving ECU 50, the HMI control device 100, etc.

The traveling control ECU 40 is an electronic control unit including a microcontroller as its main component. The traveling control ECU 40 generates vehicle speed information indicating the current traveling speed of the host vehicle Am based on detection signals of wheel speed sensors mounted to hub portions of respective wheels, and outputs the generated vehicle speed information successively to the communication bus 99. The traveling control ECU 40 has at least functions of a braking control ECU, a driving control ECU, and a steering control ECU. The traveling control ECU 40 continuously executes a braking force control of each wheel, an output control of a powertrain 41, and a steering angle control based on any of an operation command based on the driver's driving operation and a control command from the automated driving ECU 50.

The powertrain 41 is mounted to the host vehicle Am and generates power to travel the host vehicle Am. The powertrain 41 may be, as an example, a hybrid power unit including multiple power sources, such as an internal combustion engine burning fuel such as gasoline or diesel oil, and a motor-generator for driving. The powertrain 41 may include only one of: the internal combustion engine; and the motor-generator, in other words, may be a single power source configuration.

The air conditioning ECU 42 is an electronic control unit including a microcontroller as its main component. The air conditioning ECU 42 has a function of controlling an air conditioning unit (Heating Ventilation and Air-Conditioning) mounted to the host vehicle Am. The air conditioning ECU 42 adjusts an operating state of the air conditioning unit, specifically, temperature of air-conditioned wind, air flow rate, and direction of an air outlet, based on the operation information acquired from the HMI control device 100.

The vehicle-external notifier device 45 includes a vehicle-external display that presents information to an outside of the host vehicle Am. The vehicle-external display may be configured to be capable of displaying text or may be configured to present information by changing a lighting mode. The vehicle-external display is mounted on a front surface of the host vehicle Am in a position in which a display surface faces forward of the host vehicle Am. As an example, the vehicle-external display is located at the front end of the host vehicle Am and between a pair of a left headlight and a right headlight. The vehicle-external notifier device 45 may include vehicle-external displays located on both the left and right-side surfaces of the host vehicle Am. The vehicle-external notifier device 45 may include a vehicle-external display arranged on the rear surface of the host vehicle Am with the display surface facing rearward. Further, the vehicle-external notifier device 45 may include a vehicle-external speaker that outputs sound to the outside of the vehicle.

The HMI control device 100, together with a plurality of display devices, an audio device 24, an ambient light 25, and an operating device 26, etc., constitute the HMI system 10. The HMI system 10 has an input interface function of receiving an operation by an occupant such as the driver of the host vehicle Am and an output interface function of presenting information to the driver.

The display device visually presents information to the driver by displaying images, etc. The display device includes a meter display 21, a center information display (hereinafter called CID) 22, and a head-up display (hereinafter called HUD) 23. The CID 22 has a touch panel function and detects a touch operation to the display screen by the driver or the like.

The audio device 24 includes a plurality of loudspeakers mounted in the cabin. The audio device 24 reproduces a notification sound or voice message, etc., in the cabin by means of a loudspeaker. The ambient light 25 is arranged to an instrument panel, a center console, a steering wheel, a door trim, etc. The ambient light 25 performs ambient display to change emission color, thereby attaining information presentation utilizing the driver's peripheral vision.

The operating device 26 is an input unit that receives a user operation performed by driver or the like. Examples of the user operation input to the operating device 26 include a user operation related to activation and deactivation of the automated driving function, a user operation related to setting the destination for route guidance, and a user operation related to setting the air conditioning. The operating device 26 includes a steer switch arranged on a spoke of a steering wheel, a control lever arranged to a steering column, and a speech input device that recognizes occupant's speech.

The HMI control device 100 is a computer including a control circuit as its main component, the control circuit including a processing unit 11, a RAM 12, a storage unit 13, an input/output interface 14, and a bus connecting these. The HMI control device 100 functions as a presentation control device and integrally controls information presentation using the multiple display devices, the audio device 24, the ambient light 25, etc. The HMI control device 100, in cooperation with the automated driving ECU 50, presents information related to the automated driving. For example, when the autonomous traveling control is scheduled to be ended by the automated driving ECU 50, the HMI control device 100 notifies the driver about a request for driving takeover.

The HMI control device 100 acquires the operation information indicating the content of the user operation from the CID 22, the operating devices 26, etc. The HMI control device 100 provides the automated driving ECU 50 with the operation information, etc., on the user operation related to the automated driving function. The HMI control device 100 also provides the navigation ECU 38 with the operation information on the user operation of setting the destination of the host vehicle Am. In addition, the HMI control device 100 provides the air conditioning ECU 42 with the operation information on the user operation of changing the setting of the air conditioning unit.

### <Automated Driving ECU Configuration>.

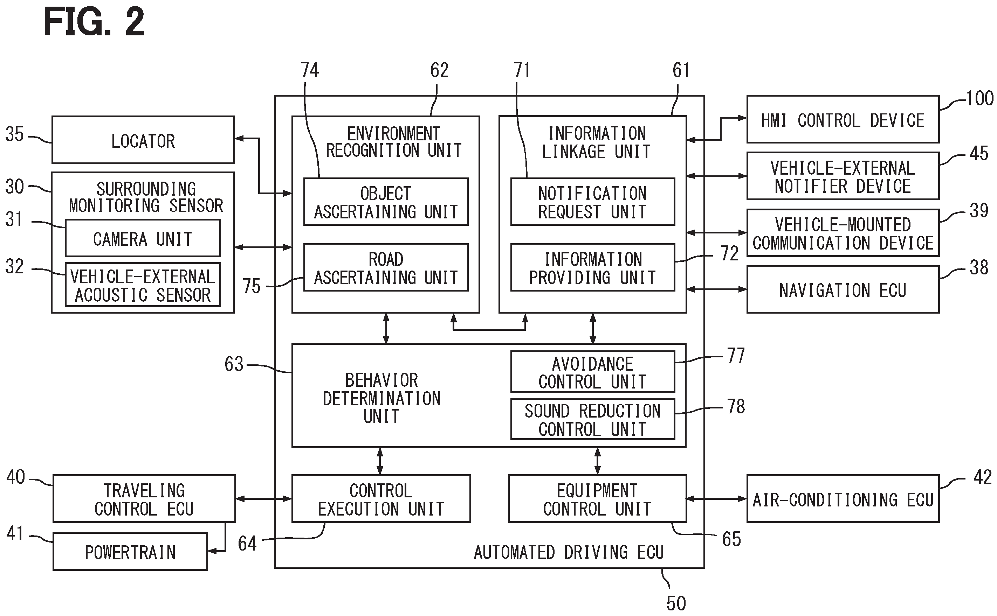

The automated driving ECU 50 shown in FIGS.1 and 2 is a computer including a control circuit as its main component, the control circuit including a processing unit 51, a RAM 52, a storage unit 53, an input/output interface 54, and a bus connecting these. The processing unit 51 executes various processes (instructions) to implement an automated driving control method according to the present disclosure by accessing the RAM 52. Various programs (automated driving control program, etc.) executed by the processing unit 51 are stored in the storage unit 53. Functional units for the automated driving function and the vehicle control function are constructed in the automated driving ECU 50 by the processing unit 51 executing programs, wherein the functional units includes an information linkage unit 61, an environment recognition unit 62, a behavior determination unit 63, a control execution unit 64, and an equipment control unit 65.

The information linkage unit 61 enables information linkage of the automated driving ECU 50 with the navigation ECU 38, the vehicle-mounted communication device 39, the external notifier device 45, the HMI control device 100, etc. The information linkage unit 61 acquires the route information from the navigation ECU 38 and provides the acquired route information to the environment recognition unit 62 and the behavior determination unit 63. The information linkage unit 61 requests the navigation ECU 38 to change (reestablish) the destination or the scheduled travel route by outputting a reroute request destined for the navigation ECU 38. The information linkage unit 61 provides the detection information received at the vehicle-mounted communication device 39 to the environment recognition unit 62. The information linkage unit 61 includes a notification request unit 71 and an information providing unit 72 as sub-functional units for information linkage with other in-vehicle devices.

The notification request unit 71 outputs a request to the HMI control device 100 for notification to an inside of the vehicle, thereby enabling the HMI control device 100 to perform notification synchronized with the operating state of the automated driving function. The notification request unit 71 outputs a request to the HMI control device 100 for emergency vehicle approach notification, delay permission inquiry, control duration notification, emergency warning occurrence notification, and evacuation permission inquiry, as described below. In addition, the notification request unit 71 outputs a request to the vehicle-external notifier device 45 for notification to an outside of the vehicle, thereby enabling the host vehicle to perform notification to a different vehicle, a pedestrian, etc., around the host vehicle Am. The notification request unit 71 outputs a request to the vehicle-external notifier device 45 for the emergency vehicle approach notification described below.

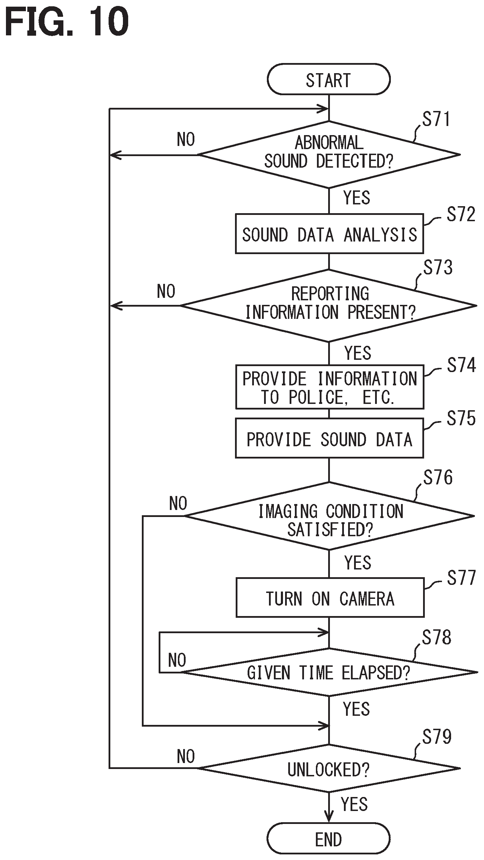

The information providing unit 72 provides the information collected in the host vehicle Am to a destination outside the host vehicle Am, in cooperation with the vehicle-mounted communication device 39. As an example, in a parking monitoring process (see FIG. 10) described below, the information providing unit 72 transmits the sound data collected by the vehicle-external acoustic sensor 32 or the analysis information from the vehicle-mounted communication device 39 to a preset reporting destination. Examples of the reporting destination include a center facility managed by the police or a security company.

The environment recognition unit 62 recognizes the traveling environment of the host vehicle Am by combining: the locator information and the map data acquired from the locator 35; and the detection information acquired from the surrounding monitoring sensor 30. The environment recognition unit 62 may acquire the detection information received by the vehicle-mounted communication device 39 from the information linkage unit 61 and use it to recognize the traveling environment. The environment recognition unit 62 acquires the vehicle speed information indicating the current traveling speed from the communication bus 99 as information indicating the state of the host vehicle Am. The environment recognition unit 62 includes an object ascertaining unit 74 and a road ascertaining unit 75 as two sub-functional units for recognizing the traveling environment.

The object ascertaining unit 74 ascertains a relative position, a relative speed, etc., of a dynamic object around the host vehicle, such as a different vehicle traveling around the host vehicle Am. The object ascertaining unit 74 ascertains incoming sound around the host vehicle Am. The object ascertaining unit 74 combines the detection information based on the sound data from the vehicle-external acoustic sensor 32 with the detection information based on the image data from the camera unit 31 to ascertain an emergency vehicle approaching the host vehicle Am, wherein examples of the emergency vehicle include a police vehicle, a fire truck, and an ambulance. The emergency vehicle in the present disclosure, unless otherwise specified, refers to an emergency vehicle traveling for emergency duty. By using the sound data, the object ascertaining unit 74 recognizes the approach of the emergency vehicle sounding a siren sound earlier than by using the image data alone. In addition, by using the detection information based on the sound data, the object ascertaining unit 74 detects an abnormal vehicle that is sounding abnormal sound. The abnormal vehicle is a different vehicle sounding the abnormal sound and is, for example, an illegally modified vehicle, a malfunctioning vehicle, etc.

The road ascertaining unit 75 acquires the road information related to the road on which the host vehicle Am is traveling or is scheduled to travel. Based on the locator information and the map data, the road ascertaining unit 75 ascertains whether or not the traveling road is a multi-lane road for each way, whether or not a host vehicle lane is a shoulder-adjacent lane, wherein the host vehicle lane is a lane where the host vehicle Am is traveling, and the shoulder-adjacent lane is a lane adjacent to a shoulder. The environment recognition unit 62 successively provides a result of the recognition of the traveling environment, i.e., information ascertained by the object ascertaining unit 74 and the road ascertaining unit 75, to the behavior determination unit 63.

When the automated driving ECU 50 has the right to control the driving tasks, the behavior determination unit 63 generates, based on the recognition result of the traveling environment by the environment recognition unit 62, a scheduled traveling line for the host vehicle Am to travel and outputs the generated scheduled traveling line to the control execution unit 64. The behavioral determination unit 63 includes an evacuation control unit 77 as a sub-functional unit for controlling the operating state of the automated driving function. In addition, the behavior determination unit 63 includes a sound reduction control unit 78 as a sub-functional unit related to sound reduction control for making the cabin of the host vehicle Am silent.

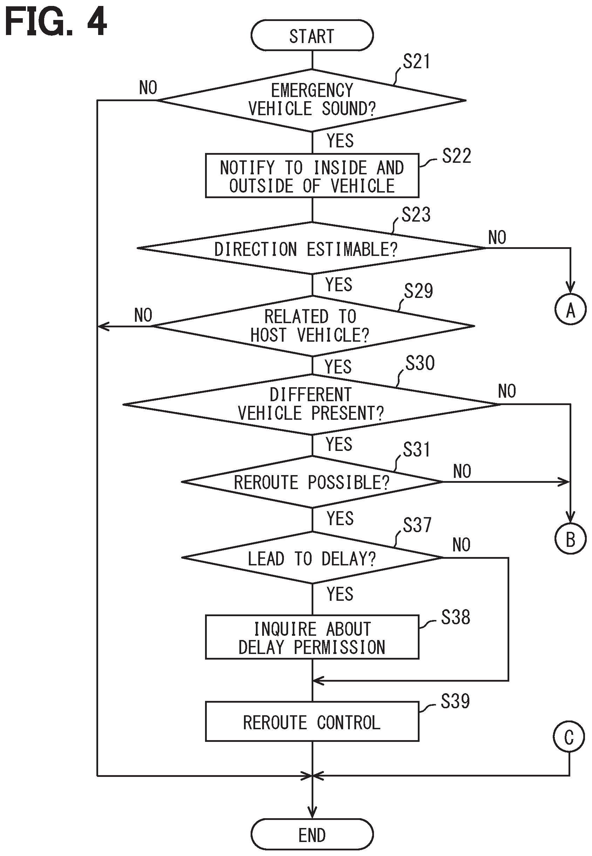

When the emergency vehicle approaching the host vehicle Am is recognized, the evacuation control unit 77 controls the behavior of the host vehicle Am to avoid the emergency vehicle. When the approach of the emergency vehicle is recognized, the evacuation control unit 77 executes at least one of the following based on the below-described emergency vehicle avoid process (see FIG 4 to FIG. 6): a stop control; a low-speed travel control; and a reroute control. The stop control is a control to stop the host vehicle Am at a position away from the emergency vehicle by a given distance or more. The low-speed travel control is a control to suppress the traveling speed of the host vehicle Am. The reroute control is a control to reestablish the scheduled travel route of the host vehicle Am so as to avoid an estimated travel route of the emergency vehicle. The change in the scheduled travel route by the reroute control may be made via a process by the behavior determination unit 63 of changing the scheduled travel line, or via a process by the information linkage unit 61 of outputting a reroute request to the navigation ECU 38.

The sound reduction control unit 78 executes a sound reduction control to reduce the sound in the cabin of the host vehicle Am so that the sound in the cabin of the host vehicle does not block the vehicle-external acoustic sensor 32 from detecting the incoming sound outside the host vehicle. The sound reduction control is a cabin sound control to reduce the sound in the cabin of the host vehicle Am. The sound reduction control unit 78 issues a request to the information linkage unit 61, the control execution unit 64, the equipment control unit 65, etc., for sound reduction in a specific sound reduction scene where the sound detection by the vehicle-external acoustic sensor 32 is important. In cooperation with the information linkage unit 61, the sound reduction control unit 78 executes the sound reduction control to lower the sound volume of the currently reproduced contents. In cooperation with the control execution unit 64, the sound reduction control unit 78 executes the sound reduction control to reduce the rotational speed of the powertrain 41 (engine, etc.). In cooperation with the equipment control unit 65, the sound reduction control unit 78 executes the sound reduction control to reduce an airflow amount of the air conditioning.

When the automated driving ECU 50 has the right to control the driving tasks, the control execution unit 64 executes control of acceleration deceleration, steering, etc., of the host vehicle Am following the scheduled traveling line generated by the behavior determination unit 63 in cooperation with the traveling control ECU 40. Specifically, the control execution unit 64 generates a control command based on the scheduled traveling line and successively outputs the generated control command to the traveling control ECU 40.

The equipment control unit 65 outputs a control command to a variety of on-board equipment mounted to the host vehicle Am and thereby controls the operation of each on-board equipment in relation to the operation of the automated driving function. The equipment control unit 65 outputs a control command to the air conditioning ECU 42 based on the request for sound reduction acquired from the sound reduction control unit 78 in the sound reduction control scene, thereby temporarily suppressing the operation of the air conditioning system.

### <Emergency Vehicle Responding Control under Driving Automation Level 3>.

The automated driving vehicle described so far needs to take care of the emergency vehicle approaching the host vehicle Am during the autonomous traveling time period, without relying on the driver's judgement. If the control to stop the automated driving vehicle alone is executed, the following situation may happen; the automated driving vehicle may stop on the traveling route of the emergency vehicle and interfere with the traveling of the emergency vehicle; or a vehicle having stopped following the automated driving vehicle may interfere with the traveling of the emergency vehicle.

In view of this, the automated driving ECU 50 detects an emergency vehicle by an acoustic recognition technology and controls the host vehicle Am so as to not only stop the host vehicle Am but also avoids blocking the emergency vehicle while ascertaining a situation of a different vehicle traveling around the host vehicle Am. In addition, by the acoustic recognition technology, the automated driving ECU 50 detects an occurrence of disaster such as earthquake, approach of the abnormal vehicle, etc., and controls the behavior of the host vehicle Am to respond to these kinds of event. Furthermore, even when the host vehicle Am is in a parked state and the occupant has been away from the host vehicle Am, the automated driving ECU 50 detects such sound outside the host vehicle as speech of a criminal, crime-related screaming, etc., by the speech recognition technology, thereby helping crime prevention.

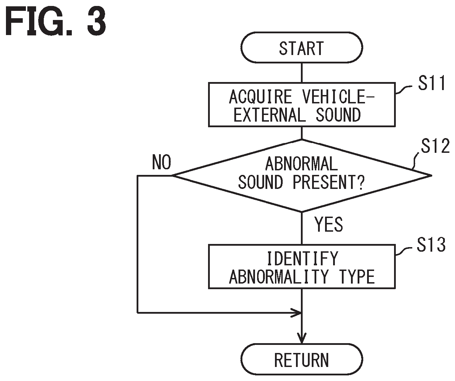

In the below, a vehicle-external sound recognition process for the above responding control using the acoustic recognition technology, an emergency vehicle avoidance process, an avoidance continuation process, an emergency information notification process, an abnormal vehicle avoidance process, and a parking monitoring process will be described in detail based on FIGS.3 to 10 with reference to FIGS.1 and 2.

### [Vehicle-External Sound Recognition Process].

In the vehicle-external sound recognition process shown in FIG. 3, the approach of the emergency vehicle or the abnormal vehicle, or the occurrence of emergency warning is detected by the vehicle-external environment recognition unit 62. The vehicle-external sound recognition process is started based on the activation of the automated driving ECU 50 and is repeated until the automated driving ECU 50 stops operating.

Example of the emergency warning include an automated broadcast by an emergency warning system operated by the government or the like. In the emergency warning, a number of loudspeakers arranged outdoor broadcast information on natural disaster such as earthquake, tsunami, etc., as well as man-made disaster such as missile launch, etc., to an area that may be influenced by the disaster.

In S11 of the vehicle-external sound recognition process, the environment recognition unit 62 acquires the sound data generated by the vehicle-external acoustic sensor 32, wherein the sound data is data on the vehicle-external sound. The environment recognition unit 62 may acquire the analysis information of the sound data instead of or together with the sound data from a data processing unit associated with the vehicle-external acoustic sensor 32. In S12, the environment recognition unit 62 determines based on the acquired sound data whether or not there is an abnormal sound indicating abnormality. If no abnormal sound is detected (S12: NO), the vehicle-external sound recognition process for this time is ended. Even in this case, the detection for the abnormal sound continues by repeatedly executing the vehicle-external sound recognition process.

In contrast, if there is the abnormal sound detected (S12: YES), the environment recognition unit 62 determines type of abnormality by analyzing the sound data in S13. Specifically, the environment recognition unit 62 ascertains the approach of the emergency vehicle, the occurrence of the emergency warning, the approach of the abnormal vehicle or the like as the type of the abnormality that is occurring. The environment recognition unit 62 executes the detection for the abnormality itself and the detection for ascertaining the content of the abnormality in a stepwise manner. In the following description, for convenience, the detection for the abnormality itself using the sound data may be referred to as "first detection" and the detection for ascertaining the content of the abnormality may be referred to as "second detection.

In detail, upon recognizing the approach of the emergency vehicle in the first detection, the environment recognition unit 62 specifies the relative position (direction and distance) of the emergency vehicle to the host vehicle Am and the direction of movement of the emergency vehicle in the second detection. Upon recognizing the emergency warning in the first detection, the environment recognition unit 62 specifies the content of the disaster warned in the emergency warning in the second detection. Furthermore, upon recognizing the approach of the abnormal vehicle in the first detection, the environment recognition unit 62 classifies the abnormal vehicle into an illegally modified vehicle (such as a vehicle of a motorcycle gang), a malfunctioning vehicle, etc., and further specifies the relative position and the direction of movement of the abnormal vehicle in the second detection.

### [Emergency Vehicle Avoidance Process].

The emergency vehicle avoidance process shown in FIGS.4 through 6 is used to control the behavior of the host vehicle Am to avoid the emergency vehicle. The emergency vehicle avoidance process, like the vehicle-external sound recognition process (see FIG. 3), is started based on the activation of the automated driving ECU 50 and is repeated until the automated driving ECU 50 stops operating.

In S21 of the emergency vehicle avoidance process, it is determined whether or not the sound of the emergency vehicle, such as a siren or warning bell, has been detected by the acoustic sensing conducted in the vehicle-external sound recognition process (see FIG. 3). If the sound of the emergency vehicle has not been detected and the approach of the emergency vehicle is not recognized (S21: NO), the emergency vehicle avoidance process is ended.

In contrast, if the sound of an emergency vehicle has been detected (first detection) and the approach of the emergency vehicle is recognized (S21: YES), the information related to the emergency vehicle is notified to both the inside and the outside of the vehicle in S22. The notification request unit 71 outputs an execution request to the HMI control device 100, and thereby executes notifying the occupant in the cabin about the approach of the emergency vehicle by using the meter display 21 and CID 22, etc. An image indicating the approach of the emergency vehicle is displayed on the meter display 21 and the CID 22 as the emergency vehicle approach notification. In addition, by using the vehicle-external notifier device 45 mounted to the host vehicle Am, the notification request unit 71 executes notification of the emergency vehicle approach to a different vehicle and a pedestrian around the host vehicle Am. Based on the execution request acquired from the notification request unit 71, the vehicle-external notifier device 45 displays a text message, etc., indicating the approach of the emergency vehicle as the emergency vehicle approach notification. The notification of the emergency vehicle approach to the outside of the vehicle is executed before starting the stop control and the low-speed travel control.

In the notification of the emergency vehicle approach, the information is notified by reproducing a speech message in place of by displaying the image, the text message, etc., or in addition to by displaying. When the host vehicle Am is not equipped with the vehicle-external notifier device 45, the emergency vehicle approach notification to the outside of the host vehicle may not be executed.

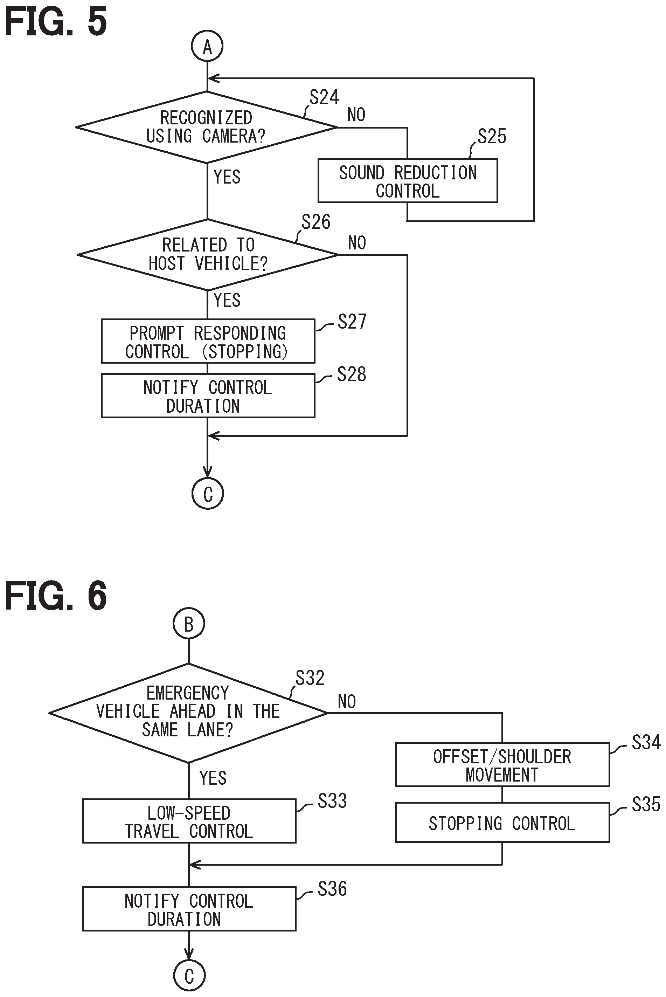

In S23, the environment recognition unit 62 determines whether or not the relative direction of the emergency vehicle has been detected (second detection), or in other words, whether or not the direction of the emergency vehicle is estimable. If the relative direction of the emergency vehicle has not yet been detected and only the presence of the emergency vehicle has been detected (S23: NO), the environment recognition unit 62 in S24 (see FIG. 5) determines whether or not the emergency vehicle is successfully detected from the image data captured by the camera unit 31. In the following description, the detection for the emergency vehicle using the imaging data may be referred to as "third detection.

If the emergency vehicle has not entered an imaging range of the camera unit 31 and the emergency vehicle is unsuccessfully detected from the imaging data (S24: NO), the sound reduction control unit 78 executes the sound reduction process in S25. The sound reduction control unit 78 executes the sound reduction control as appropriate, such as lowering the volume of the reproduced content, lowering the rotation speed of the powertrain 41 (engine, etc.), and lowering the air flow amount of the air conditioning system. The sound reduction control prevents the sound in the cabin, the noise, from being incorporated in the sound data of the vehicle-external acoustic sensor 32. The sound reduction control continues until the emergency vehicle is detected from the image data of the camera unit 31, in other words, until the emergency vehicle is recognized by the camera unit 31. The sound reduction control is ended upon the recognition of the emergency vehicle by the camera unit 31. Upon end of the sound reduction control, a sound state in the cabin is restored to the original state being a state before the start of the control.

In contrast, if the emergency vehicle is successfully detected from the image data (S24: YES), the environment recognition unit 62 determines in S26 whether or not the detected emergency vehicle relates to the host vehicle Am. For example, if a possibility of overlapping between the estimated travel route of the emergency vehicle and the scheduled travel route of the host vehicle is absent because the emergency vehicle is traveling in the opposite lane, etc., the environment recognition unit 62 determines that the emergency vehicle does not relate to the host vehicle Am. In contrast, if there is a possibility of overlapping between the estimated travel route of the emergency vehicle and the scheduled travel route of the host vehicle because the emergency vehicle is traveling in the same lane as the host vehicle Am and approaching from behind, etc., the environment recognition unit 62 determines that the emergency vehicle relates to the host vehicle Am.

If the emergency vehicle does not relate to the host vehicle Am (S26: NO), the emergency vehicle avoidance process is ended. In contrast, if the emergency vehicle relates to the host vehicle Am (S26: YES), the evacuation control unit 77 executes a prompt responding control in S27. In the prompt responding control, the behavior of the host vehicle Am is controlled in real time according to the latest relative position of the emergency vehicle ascertained by the environment recognition unit 62. As an example, the evacuation control unit 77 promptly stops the host vehicle Am in the shoulder, etc., in a state where the emergency vehicle is very close.

When the stop control of the host vehicle Am is executed by the prompt responding control, the notification request unit 71 outputs the execution request to the HMI control device 100 to start the control duration notification to the occupant in the cabin in S28. The control duration notification is a notification that indicates time information related to the stop control or the low-speed travel control to the occupant of the host vehicle Am. In the control duration notification, the CID 22 displays an estimated remaining time during which the stop control or the low-speed travel control continues, or in other words, a predicted timing of the end of the control. The remaining time presented in the control duration notification may be successively increased or decreased according to the behavior of the emergency vehicle. After letting the emergency vehicle go first, the evacuation control unit 77 ends the stop control of the host vehicle Am and re-starts the host vehicle Am. The emergency vehicle avoidance process is then ended.

In contrast, if the relative direction of the emergency vehicle is estimable (S23: YES, see FIG. 4), the environment recognition unit 62 determines in S29 whether or not the detected emergency vehicle relates to the host vehicle Am. If the emergency vehicle does not relate to the host vehicle Am (S29: NO), the emergency vehicle avoidance process is ended. In contrast, if the emergency vehicle relates to the host vehicle Am (S29: YES), the environment recognition unit 62 determines in S30 whether or not there is a different vehicle around the host vehicle, based on the detection information of the camera unit 31, etc. Examples of the different vehicle detected in S30 include a different vehicle traveling in front or rear of the host vehicle in the same lane, and a different vehicle traveling in an adjacent lane in the same direction as the host vehicle Am, wherein the adjacent lane is a lane adjacent to the host vehicle lane.

If there is the different vehicle around the host vehicle (S30: YES), the reroute control is preferentially executed in the subsequent processing over the stop control and the low-speed travel control. In this case, in S31, the behavior determination unit 63 determines whether or not it is possible to reroute. The behavior determination unit 63 may cooperate with the navigation ECU 38 via the information linkage unit 61 to determine, in cooperation with the navigation ECU 38, whether or not it is possible to reroute. If there is a right/left turn permitted intersection within a given distance from the host vehicle in the heading direction of the host vehicle and it is possible to set the scheduled travel route of the host vehicle Am to avoid the estimated travel route of the emergency vehicle, the behavior determination unit 63 determines that it is possible to reroute. In contrast, if there is no right/left turn permitted intersection within the given distance from the host vehicle in the heading direction of the host vehicle and it is difficult to set the scheduled travel route of the host vehicle Am to avoid the estimated travel route of the emergency vehicle, the behavior determination unit 63 determines that it is impossible to reroute.

If the different vehicle is absent around the host vehicle (S30: NO), or if the behavior determination unit 63 determines that it is not possible to reroute (S31: NO), the environment recognition unit 62 determines the relative position of the emergency vehicle. Specifically, the environment recognition unit 62 determines in S32 (see FIG. 6) whether or not the emergency vehicle is traveling in front of the host vehicle Am in the same lane as the host vehicle Am.

If the emergency vehicle is traveling in front of the host vehicle Am in the same lane (S32: YES), the evacuation control unit 77 executes the low-speed travel control in S33 to suppress the traveling speed of the host vehicle Am in the host vehicle lane. Furthermore, when the low-speed travel control is executed, the notification request unit 71 outputs the execution request to the HMI control device 100 in S36 and thereby starts the control duration notification to the occupant in the cabin. The control duration notification in this case displays the estimated end timing of the low-speed travel control on the CID 22, etc.

When the emergency vehicle is traveling in a lane different than the host vehicle Am or traveling behind the host vehicle Am (S32: NO), the evacuation control unit 77 executes an offset control or a shoulder movement control in S34. The offset control is a control to execute as evacuation steering control in the direction away from the emergency vehicle while continuing the low-speed travel control within the host vehicle lane. The shoulder movement control is a control to move the host vehicle Am out of the host vehicle lane toward the shoulder, by the evacuation steering control in the direction away from the emergency vehicle.

In S35, the evacuation control unit 77 further executes the stop control to stop the host vehicle Am at a position away from the emergency vehicle by a given distance or more. Then, in S36, the notification request unit 71 outputs the execution request to the HMI control device 100 and thereby starts the control duration notification to the occupant in the cabin. The control duration notification in this case displays the estimated end timing of the stop control on the CID 22, etc.

When there is the different vehicle around the host vehicle, the evacuation control unit 77 may execute preliminary evacuation control. The preliminary evacuation control is a traveling control executed before starting the low-speed travel control (S33) and the stop control (S34 and S35) and is a lane change control to move the host vehicle Am into a non-congested lane. The non-congested lane is a lane where the number of different vehicles is less than the host vehicle lane where the host vehicle Am is traveling, and the non-congested lane may be a lane where there is no different vehicle, or a lane (shoulder lane, etc.) where the deceleration of the host vehicle Am hardly influences the different vehicle. If the traveling road is a single lane road for each way, the preliminary evacuation control is skipped.

In contrast, upon determining that it is possible to reroute (S31: YES, see FIG. 4), the behavior determination unit 63 determines in S37 whether or not to the rerouting leads to a delay in the estimated time of arrival at the destination. If the delay in the estimated time of arrival at the destination will occur (S37: YES), the notification request unit 71 outputs an execution request to the HMI control device 100 and thereby executes a delay permission inquiry to the occupant in the cabin in S38. In contrast, if the delay in the estimated time of arrival at the destination will not occur (S37: NO), the delay permission inquiry in S38 is skipped. Only if the time of arrival at the destination after the reroute becomes later than that before the reroute by more than a given time length, the notification request unit 71 may execute the delay permission inquiry in S38.

The delay permission inquiry is executed using, for example, the CID 22. The delay permission query presents such information that, when the reroute control is executed, the time of host vehicle Am arrival at the destination will become later than that before the reroute. Additionally, in the delay permission query, an inquiry to the occupant about whether to permit an option of the route change leading to the delay in arrival time is made. In response to the proposal for the reroute in this delay permission inquiry, the occupant such as the driver or the like permits the change into the new route to avoid the emergency vehicle by inputting an operation indicative of agreement to the proposal to the CID 22 or the operating device 26, etc.

The behavior determination unit 63 executes the reroute control in S39. In this case, the behavior determination unit 63 reestablishes the scheduled travel route of the host vehicle Am so as to avoid the estimated travel route of the emergency vehicle. The emergency vehicle avoidance process is then ended. If the occupant of the host vehicle Am does not permit the rerouting in response to the delay permission inquiry in S38, the evacuation control unit 77 may execute the low-speed travel control or the stop control instead of the reroute control.

### [Avoidance Continuation Process].

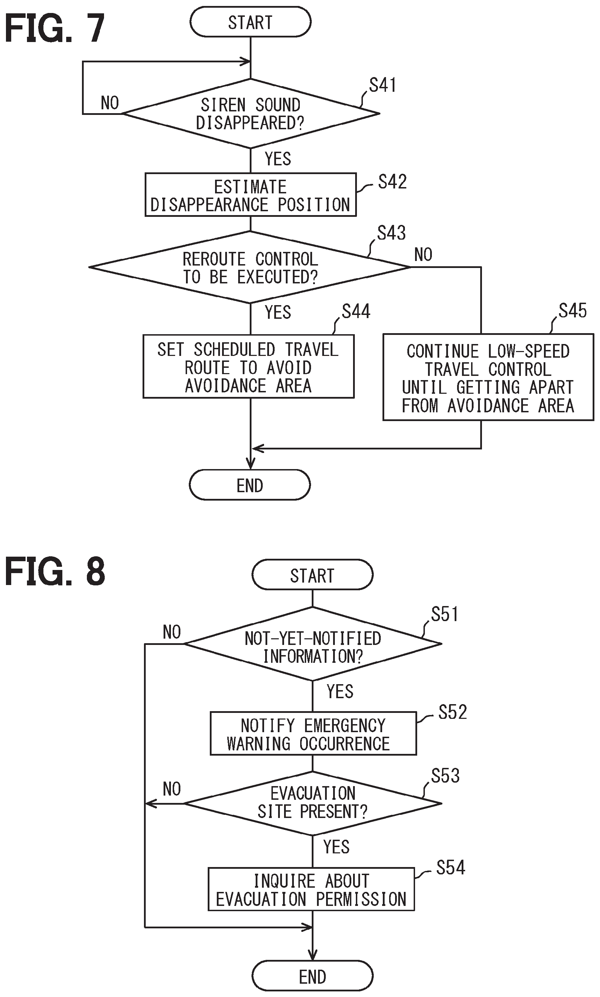

The avoidance continuation process shown in FIG. 7 is designed to appropriately continue the avoidance behavior started in the emergency vehicle avoidance process (see FIGS.4 to 6) even when the emergency vehicle has stopped sounding the siren sound. Based on determining to execute the reroute control or the low-speed travel control in the emergency vehicle avoidance process, the avoidance continuation process is started by the automated driving ECU 50.

In S41 of the emergency vehicle avoidance process, the environment recognition unit 62 determines based on the sound data whether or not the siren sound of the emergency vehicle has disappeared. If sounding the siren sound continues (S41: NO), the environment recognition unit 62 stands by for the siren sound to disappear. In contrast, if the siren sound has disappeared (S41: YES), the environment recognition unit 62 estimates in S42 a disappearance position at which the emergency vehicle stopped sounding the siren sound, specifically, the relative direction and relative distance of the location where the siren sound disappeared.

In S43, the control for avoidance behavior to be executed as determined in the emergency vehicle avoidance process is specified. If execution of the reroute control is selected in the emergency vehicle avoidance process (S43: YES), the evacuation control unit 77 reestablishes the scheduled travel route of the host vehicle Am in S44 so as to avoid an avoidance area within a given distance (e.g., hundreds meters) from the disappearance position.

In contrast, if execution of the low-speed travel control is selected in the emergency vehicle avoidance process (S43: NO), the evacuation control unit 77 in S45 continues the low-speed travel control until the host vehicle moves out of the avoidance area that is set based on the disappearance position. The avoidance area may be, for example, one section or blocks including the disappearance position. In the above way, the host vehicle Am can continue traveling at low speed until it moves out of the avoidance area where the emergency vehicle is stopped.

### [Emergency Information Notification Process].

The emergency information notification process shown in FIG. 8 is a process to notify the occupant of the host vehicle Am about information that is based on the emergency warning. The emergency information notification process is started by the automated driving ECU 50 based on recognizing the occurrence of the emergency warning in the vehicle-external sound recognition process (see FIG. 3) and specifying the content of the disaster, etc. warned in the emergency warning (second detection).

In S51 of the emergency information notification process, the notification request unit 71 determines whether the same content as the emergency warning recognized from the speech has been already notified to the occupant. If the content of the emergency warning has been already acquired via a path different than the vehicle-external sound recognition process of the environment recognition unit 62, e.g., already acquired via the V2X communication of the vehicle-mounted communication device 39, the notification request unit 71 determines that not-yet-notified information is absent (S51: NO). In this case, the emergency information notification process is ended.

In contrast, if the content of the emergency warning is not-yet-notified information (S51: YES), the notification request unit 71 outputs an execution request to the HMI control device 100 to execute the emergency warning occurrence notification to the occupant in the cabin in S52. The emergency warning occurrence notification is executed using all the display devices, the audio device 24, and the ambient light 25. In the emergency warning notification, the ascertained content of the emergency warning is presented to the occupant by a text message, a voice message, and light emission in warning color.

In S53, the behavior determination unit 63 determines whether or not setting of an evacuation destination corresponding to the content of the emergency warning is present. If the setting of the evacuation destination is not present (S53: NO), the emergency information notification process is ended. In contrast, if the setting of the evacuation destination is present (S53: YES), the notification request unit 71 executes an evacuation permission inquiry in S54. The evacuation permission inquiry is executed, for example, using the CID 22. Even if the content of the emergency warning has already been notified, the evacuation permission inquiry in S53 may be executed.

In the evacuation permission inquiry, the evacuation destination corresponding to the content of the emergency warning is displayed on the map screen, and a proposal to set this evacuation destination as a new destination of the host vehicle Am is made. In response to the proposal for reroute in the evacuation permission inquiry, the driver or other occupants can input an operation indicating agreement to the proposal to the CID 22 or the operating device 26, etc., to permit change into the new route for moving the host vehicle Am to the evacuation destination.

### [Abnormal Vehicle Avoidance Process].

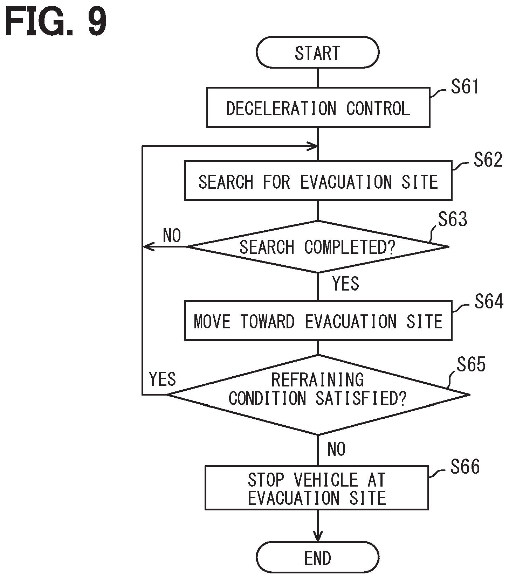

The abnormal vehicle avoidance process shown in FIG. 9 is a process for controlling the behavior of the host vehicle Am to avoid the abnormal vehicle. The abnormal vehicle avoidance process is started by the automated driving ECU 50 based on recognizing the approach of the abnormal vehicle in the vehicle-external sound recognition process (see FIG. 3) and specifying the relative position and the direction of movement of the abnormal vehicle (second detection).

In S61 of the abnormal vehicle avoidance process, the evacuation control unit 77 starts a deceleration control. Then, in S62, the environment recognition unit 62 starts searching for an evacuation site to which the host vehicle Am is to be evacuated, in cooperation with the surrounding monitoring sensor 30. The environment recognition unit 62 may cooperate with the navigation ECU 38 or the locator 35 via the information linkage unit 61 and may search for the evacuation site in cooperation with these configurations.

At S63, the evacuation control unit 77 determines whether the search for the evacuation site by the environment recognition unit 62 is successfully completed. If the search for the evacuation site continues (S63: NO), the evacuation control unit 77 waits for the completion of the search for the evacuation site. In contrast, if the evacuation site search is successfully completed (S63: YES), the evacuation control unit 77 moves the host vehicle Am toward the retrieved evacuation site in S64.

In S65, by using the acquired data of sound in the vicinity of the evacuation site, the environment recognition unit 62 specifies incoming sound (vehicle-external sound) around the host vehicle Am. Based on the incoming sound, the environment recognition unit 62 determines whether an environment of the closest evacuation site is suitable for evacuation. Specifically, depending on whether or not the ascertained incoming sound meets a given refraining condition, the environment recognition unit 62 refrains from stopping the host vehicle at the evacuation site unsuitable for evacuation. The refraining condition is, for example, such that the sound of the abnormal vehicle is approaching, person's screaming or shouting is detected, or child's voice is detected.

If the evacuation site does not meet the refraining condition (S65: NO), the evacuation control unit 77 stops the host vehicle Am in the evacuation site in S66. In contrast, if the evacuation site meets the refraining condition (S65: YES), a search for another evacuation site is executed by the environment recognition unit 62 in S62. As a result, the vehicle is prevented from stopping in the evacuation site where the incoming sound meets the given refraining condition. According to the above, the host vehicle Am can evacuate to a quiet area where the occupant does not feel uneasy, without staying in an unsafe area, a noisy area, or an area with a high risk of children jumping out.

### [Parking Monitoring Process].

The parking monitoring process shown in FIG. 10 is a process related to security while the host vehicle Am is parked. The parking monitoring process is started, for example, in response to locking the host vehicle Am or turning on the security function by an administrator of the host vehicle Am or the like.

In S71 of the parking monitoring process, the environment recognition unit 62 starts the detection for the abnormal sound using the sound data. The environment recognition unit 62 causes the vehicle-external acoustic sensor 32 mounted to the host vehicle Am to continue collecting sound even when the host vehicle Am is parked. The environment recognition unit 62 determines whether or not there is the abnormal sound detected. The abnormal sound is such a sound outside the vehicle that involved in a crime as human voice, screaming, collision sound, explosion sound, etc. If there is no abnormal sound detected (S71: NO), the environment recognition unit 62 keeps a state of standby for the abnormal sound.

If the environment recognition unit 62 detects the abnormal sound (S71: YES), the sound data is analyzed in S72. If the abnormal sound is the human voice, the environment recognition unit 62 executes voiceprint analysis and checks it against pre-acquired voiceprint data of wanted criminals and missing persons, etc. In S73, the environment recognition unit 62 determines whether or not there is information to be provided to a predetermined reporting destination (hereinafter referred to as "reporting information") based on the sound data analysis result. For example, if the sound data is detected that matches the voiceprint data of a wanted criminal, a missing person, etc., or if the screaming, the collision sound, the explosion sound, or the like is extracted, the environment recognition unit 62 determines that there is the reporting information. If there is no reporting information (S73: NO), the environment recognition unit 62 continues the detection for the abnormal sound in S71.

In contrast, if there is the reporting information (S73: YES), the information providing unit 72 reports the occurrence of the abnormality to a preset destination such as the police or a security company in S74. In addition, in S75, the information providing unit 72 provides, by transmission, the reporting destination with at least one of: the sound data collected by the vehicle-external acoustic sensor 32; and the analysis information. As a result, voice of a wanted criminal, a missing person or the like, a result of the voiceprint analysis, sound data storing the screaming of a passerby, etc., is provided to the police, etc., as the analysis information. A process of analyzing the sound data such as voiceprint analysis may be executed at the center facility of the police or a security company being the reporting destination. In this case, in S75, the information providing unit 72 provides the center facility with a part of the sound data of the vehicle-external acoustic sensor 32, wherein the part is extracted to contain the abnormal sound.

In S76, the environment recognition unit 62 determines whether or not a condition for starting imaging by the camera unit 31 (hereinafter referred to as "imaging condition") is met. If the environment recognition unit 62 detects, for example, an occurrence of screaming around the host vehicle Am based on the sound data, it is determined that the imaging condition is met (S76: YES). In this case, the environment recognition unit 62 causes the camera unit 31 to start imaging the surrounding of the host vehicle at S77. The image data (recorded data) by the camera unit 31 is stored in the storage unit 53 or an external storage medium connected to the automated driving ECU 50. Imaging by camera unit 31 continues for a given period of time. Based on elapse of the given period of time since start of the imaging (S78: YES), the environment recognition unit 62 ends imaging by the camera unit 31. In contrast, if the imaging condition is not met (S76: NO), imaging by camera unit 31 is not executed.

In S79, the environment recognition unit 62 determines whether or not the host vehicle Am is unlocked (the lock released). If unlocked (S79: YES), the parking monitoring process is ended. In contrast, if the locked state continues (S79: NO), the environment recognition unit 62 continues the detection for the abnormal sound in S71.

### <Embodiment Overview>.

In the present embodiment described so far, when the emergency vehicle is recognized, the behavior of the host vehicle Am is controlled to avoid the emergency vehicle. Because of this, a situation where the host vehicle Am traveling under the autonomous traveling control interferes with the emergency vehicle hardly happens. As a result, it is possible to attain the automated driving that hardly exerts an influence on the traveling of the emergency vehicle.

In detail, upon recognition of the emergency vehicle, the behavior determination unit 63 does not merely stop the host vehicle Am but executes the stop control to stop the host vehicle Am at a position away from the emergency vehicle by a given distance or more or executes at least one of: the low-speed travel control; and the reroute control. Therefore, it is possible to avoid a situation where the host vehicle Am stops on the travel route of the emergency vehicle and a situation where a different vehicle that stopped behind the host vehicle Am due to the stop of the host vehicle Am interferes with the travel of the emergency vehicle.

In addition, in the present embodiment, the delay permission inquiry is executed when the rerouting leads to a delay in the estimated time of arrival at the destination. In this delay permission inquiry, an inquiry to the occupant of the host vehicle Am about whether to permit the execution of the rerouting is made. According to the above, it is possible to execute behavioral control to avoid the emergency vehicle while taking into account occupant convenience.

In the present embodiment, when the approach of the emergency vehicle is recognized, at least one of: the stop control to stop the host vehicle Am at a position away from the emergency vehicle by a given distance or more; and the low-speed travel control to suppress the traveling speed of the host vehicle Am is executed. Via this stop control or the low-speed travel control, it is possible to avoid the emergency vehicle while minimizing the delay in arrival time.

Furthermore, prior to starting the stop control or the low-speed travel control, the evacuation control unit 77 of the present embodiment moves the host vehicle Am into a non-congested lane where the number of different vehicles is smaller than the host vehicle lane or there is no different vehicle. When the acoustic recognition technology is used to detect the emergency vehicle, the host vehicle Am can recognize the approach of the emergency vehicle at an earlier point in time than a different vehicle around the host vehicle. In this regard, if the stop control or the low-speed travel control is started at a time when the different vehicle does not successfully recognize the emergency vehicle, this may provide a strange feeling to the driver of the different vehicles, in particular, a manual driving vehicle. In view of this, the preliminary evacuation control is executed to move the host vehicle Am into the non-congested lane in advance, so that even when the stop control or the low-speed travel control is started early, the strange feeling in the surrounding caused by this control can be suppressed.

In addition, in the present embodiment, the time information related to the stop control or the low-speed travel control is presented to the occupant of the host vehicle Am via the control duration notification. Therefore, the occupant can confirm that the stop control or the low-speed travel control is operating normally, and can wait with a feeling of safe for the end of the stop control or the low-speed travel control due to the emergency vehicle leaving the host vehicle Am.

In the present embodiment, when the different vehicle is present around the host vehicle Am, the reroute control is executed preferentially over the stop control and the low-speed travel control. Preferentially executing the reroute control can also suppress the strange feeling in the different vehicle around the host vehicle caused by the early start of the stop control or the low-speed travel control.

Furthermore, in the present embodiment, the information related to the emergency vehicle is notified to the outside of the host vehicle prior to the start of the stop control or the low-speed travel control, by using the vehicle-external notifier device 45 mounted to the host vehicle Am. Therefore, a driver of a different vehicles, a pedestrian, etc., who is unaware of the approach of the emergency vehicle can be notified in advance of the approach of the emergency vehicle. As a result, even when the behavior to avoid the emergency vehicle is started early, a strange feeling in the surrounding caused by the control can be suppressed.

In addition, in the present embodiment, the disappearance position at which the emergency vehicle stopped sounding the siren sound is estimated. Then, in the reroute control, the scheduled travel route is reestablished so as to avoid the avoidance area within a given distance from the disappearance position. Use of the siren sound detection alone hardly specifies the destination of the emergency vehicle. Therefore, there is a possibility that if the emergency vehicle temporarily stops sounding the siren sound and then starts traveling again, it comes close to the emergency vehicle again. Therefore, by establishing the scheduled traveling route so as to avoid the avoidance area a given distance from the siren sound disappearance position, it is possible to avoid the re-approach to the emergency vehicle for sure.

In the present embodiment, the low-speed travel control is continued until the vehicle moves out of the avoidance area that is set based on the disappearance position. Because of this control, it is possible to avoid the re-approach to the emergency vehicle after the end of the emergency vehicle avoidance behavior.

Furthermore, in the present embodiment, from the emergency warning broadcasted around the host vehicle Am, the content of this emergency warning is recognized. The content of the emergency warning is then notified to the occupant of the host vehicle Am via the emergency warning occurrence notification. According to the this, the occupant in the cabin can reliably ascertain the content of the emergency warning notified in the outside of the host vehicle.

In addition, in the present embodiment, if the same content as the emergency warning has already been notified based on the emergency information acquired via a different route than the environment recognition unit 62, the emergency warning occurrence notification based on the emergency warning is refrained. Therefore, it is possible to prevent that the same content is notified repeatedly and the occupant is bothered.

When the emergency warning is recognized by the environment recognition unit 62, the notification execution unit of the present embodiment provides the occupant with a proposal to set the destination of the host vehicle Am to the evacuation destination corresponding to the content of the emergency warning. According to this, in response to the occurrence of the emergency situation around the host vehicle Am, the occupant of the host vehicle Am can smoothly make setting for the host vehicle Am to move to the appropriate evacuation destination.

Furthermore, in the present embodiment, the sound reduction control is executed as the in-cabin sound control to reduce the sound in the cabin of the host vehicle Am based on the first detection. Therefore, the sound in the vehicle cabin, which could be noise to the sound data of the vehicle-external acoustic sensor 32, has been reduced at the timing to execute the second detection. As a result, the second detection can be executed with high accuracy.

In addition, in the present embodiment, the detection for the abnormal vehicle sounding the abnormal sound is executed using the sound data collected by the vehicle-external acoustic sensor 32. Then, when the abnormal vehicle is detected, the behavior of the host vehicle Am is controlled so as to avoid the abnormal vehicle. By the automated behavior for avoiding not only the emergency vehicle but also the abnormal vehicle in the above described way, it is possible to reduce the occupant concern about the automated driving vehicle.

In the present embodiment, by using the sound data, the incoming sound around the host vehicle Am is ascertained. In the evacuation behavior in the case where the abnormal vehicle is detected, the evacuation control unit 77 refrains from stopping the host vehicle at the evacuation site where the incoming sound meets the given refraining condition. According to this, from among possible evacuation sites, the host vehicle Am can stop at a quiet site where the outside of the host vehicle is quiet. As a result, it is possible to refrain from stopping the host vehicle in a high-risk area, e.g., an unsafe area, a noisy area, an area with many children around, etc.

Furthermore, in the present embodiment, the vehicle-external acoustic sensor 32 continues collecting the sound even when the host vehicle Am is parked. At least one of: the sound data collected by the vehicle-external acoustic sensor 32; and the analysis information of the sound data is provided to a preset reporting destination. According to this, during the time period of the parked state of the host vehicle Am, it is possible to capture the sound outside the host vehicle that may be involved in a crime, e.g., voice of a criminal, screaming, etc., and it is possible to use it for crime prevention.

In addition, in the present embodiment, imaging using the camera unit 31 is started upon detecting the screaming around the host vehicle Am based on the sound data. According to this, it is possible to automatically store the data captured by the camera unit 31 only in the timing of an occurrence of an abnormality around the parked-state host vehicle Am.

In the present embodiment, the voiceprint analysis on the sound data is also executed by the environmental recognition unit 62. The information providing unit 72 then provides a result of the voiceprint analysis by the environment recognition unit 62 to the reporting destination as the analysis information. The voiceprint analysis using vehicle resources as described above enables efficient collection of information on criminals, missing persons, etc., from a wide range.

In the above embodiment, the camera unit 31 corresponds to a "vehicle-external camera unit", the vehicle-external acoustic sensor 32 corresponds to a "vehicle-external sound detection unit", and the environment recognition unit 62 corresponds to a "vehicle-external recognition unit." The behavior determination unit 63 corresponds to a "behavior control unit," the notification request unit 71 corresponds to a "notification execution unit," and the automated driving ECU 50 corresponds to an "automated driving control device."

### (Other embodiments).

Although one embodiment according to the present disclosure has been described above, the present disclosure is not limited to the above-described embodiment and is applicable to various embodiments and combinations without departing from the spirit and scope of the present disclosure.

In the above embodiment, the first detection (S21), the second detection (S23), and third detection (S24) are executed in a stepwise manner, and the low-speed travel control (S33) or the stop control (S35) is executed as "the second control" after completion of the first detection and the second detection. The prompt responding control (S27) is executed as the "third control" after the completion of the first detection and the third detection.

In contrast, in a first modification example of the above embodiment, the control executed after the first detection and before the second detection is the "first control." The control executed after the second detection and before the third detection is the "second control". Furthermore, the control executed after the third detection is the "third control". In the emergency vehicle avoidance process of the first modification example, the low-speed travel control corresponds to the "first control" and the stop control related to the offset control or the shoulder movement control corresponds to the "second control". Furthermore, the prompt responding control corresponds to the "third control".

In the first control and the second control, the evacuation control unit 77 changes at least one of: a speed target value; and a steering control amount of the host vehicle Am. Specifically, in the first control, control is executed to travel at specific positions within the same single lane (host vehicle lane) and moving into an adjacent lane is not permitted. Specifically, in the first control, the setting of the speed target value to stop the host vehicle Am and the setting of the steering control amount to make the host vehicle move laterally with respect to the host vehicle lane are restricted. In contrast, in the second control, steering control to approach to one side within the same single lane (host vehicle lane), steering control to make a lane change toward the shoulder and changing the speed target value to stop the host vehicle Am are permitted.

By using the sound data collected by the vehicle-external acoustic sensor 32, the environment recognition unit 62 of the first modification example above executes the first detection to detect the presence of the emergency vehicle and the second detection to further detect the relative direction of the emergency vehicle in a stepwise manner. In the first control executed after the first detection and before the second detection and the second control executed after the second detection, the evacuation control unit 77 changes at least one of: the speed target value; and the steering control amount of the host vehicle Am. According to this, the behavior of the host vehicle Am for avoiding the emergency vehicle can be accomplished step by step as the emergency vehicle approaches the host vehicle Am.

In addition, in the first modification example, the low-speed travel control to suppress the traveling speed of the host vehicle Am is executed as the first control. Then, the stop control to stop the host vehicle Am or the evacuation steering control to move the host vehicle Am away from the emergency vehicle is executed as the second control. Suppressing the traveling speed of host vehicle Am in the first control suppresses traveling noise of the host vehicle Am. Therefore, the second detection to detect the relative direction of the emergency vehicle from the sound data can be executed with high accuracy. As a result, it is possible to smoothly evacuate the host vehicle Am away from the route of the emergency vehicle as the emergency vehicle approaches.

The environment recognition unit 62 of the first modification example further executes the third detection to detect the emergency vehicle by using the image data captured by the camera unit 31. The offset control within the host vehicle lane or the lane change control to the shoulder lane adjacent to the shoulder is executed as the second control executed after the second detection and before the third detection. Furthermore, the behavior control according to the relative position of the emergency vehicle is executed as the third control executed after the third detection. As described above, according to the control to switch over the behavior of host vehicle Am for avoiding the emergency vehicle in a stepwise manner, it is possible to smoothly evacuate the host vehicle Am so as not interfere with the traveling of the emergency vehicle while not causing the occupant to have a sense of anxiety.

The automated driving ECU 50 in the above embodiment is able to execute all of the stop control, the low-speed travel control, and the reroute control. In contrast the automated driving ECU 50 according to a second modification example of the above embodiment is able to execute, based on recognition of the emergency vehicle, only one of: the stop control; the low-speed travel control; and the reroute control. The automated driving ECU 50 according to a third modification example of the above embodiment is able to execute, based on recognition of the emergency vehicle, only two of: the stop control; the low-speed travel control; and the reroute control.

In the above embodiment, the low-speed travel control is executed based on the first detection, and the stop control is executed based on the second detection. This stepwise transition of the behavioral control may not be executed. Furthermore, the third detection using the image data by the camera unit 31 and the third control (prompt responding control) based on the third detection may be omitted.

In a fourth modification example of the above embodiment, the approach of the abnormal vehicle is not recognized in the vehicle-external sound recognition process. In addition, the automated driving ECU 50 does not execute the abnormal vehicle avoidance process. In a fifth modification example of the above embodiment, the occurrence of the emergency warning is not detected in the vehicle-external sound recognition process. In addition, the automated driving ECU 50 does not execute the emergency information notification process. Furthermore, the automated driving ECU 50 in a sixth modification example of the above embodiment does not execute the parking monitoring process. As in the fourth to sixth modification examples, a process not related to avoiding the emergency vehicle may be omitted as appropriate.

The automated driving ECU 50 in the above embodiment mainly executes the autonomous traveling control of the driving automation level 3. The automated driving ECU 50 may be configured to execute the autonomous traveling control of the driving automation level 4 or the driving automation level 5, where the handover of the driving to the driver does not happen. Furthermore, the automated driving ECU 50 may be configured to autonomously travel the host vehicle Am without an onboard driver, under remote monitoring by a remote monitoring person.

At least part of functions of the automated driving ECU 50 may be implemented in another control device in the in-vehicle network 1. For example, in a seventh modification example of the above embodiment, a dedicated ECU (hereinafter, "acoustic analysis ECU") that executes analysis process on the sound data and outputs the analysis information to the environment recognition unit 62 is provided in the in-vehicle network 1. At least one of: the function of recognizing the emergency vehicle and the abnormal vehicle; the function of recognizing the emergency warning; and the function of executing the voiceprint analysis is implemented in the acoustic analysis ECU. In this seventh modification example, a system including the automated driving ECU 50 and the acoustic analysis ECU corresponds to an "automated driving control device.

In an eighth modification example of the above embodiment, the functions of the HMI control device 100 are integrated into the automated driving ECU 50. In a ninth modification example of the above embodiment, the functions of the traveling control ECU 40 are integrated into the automated driving ECU 50. Even in these eighth and ninth modification examples, the automated driving ECU 50 into which another ECU is integrated corresponds to an "automated driving control device."

In the above embodiment, each function provided by the automated driving ECU can be implemented by software and hardware executing the software, by software alone, by hardware alone, and by a combination thereof. Furthermore, when the function is provided by an electronic circuit as hardware, each function can also be implemented by a digital circuit containing a number of logic circuits and by an analog circuit. The software for implementing the function may include, at least in part, a code automatically generated by a neural network trained using, for example, real-world camera images or by a language model.

Each processing unit in the above embodiment is hardware for computational processing coupled with a RAM. The processing unit includes at least one computing core, such as a CPU (Central Processing Unit), a GPU (Graphics Processing Unit), etc. The processing unit may further include an FPGA (Field-Programmable Gate Array), a NPU (Neural network Processing Unit), or an IP core having another dedicated function. These processing units may be individually mounted on a printed circuit board or may be implemented in an ASIC (Application Specific Integrated Circuit), a FPGA, or another device.

The form of the storage medium (non-transitory tangible computer readable medium) storing various programs, etc. in the above embodiments may be changed as appropriate. Furthermore, the storage medium is not limited to being mounted on a circuit board but may be provided in the form of a memory card or the like, which is inserted into a slot and electrically connected to a control circuit such as an automated driving ECU. The storage medium may be an optical disk, a hard disk drive, or a solid-state drive that serves as a source for copying or distributing the program to the automated driving ECU or other devices.

The vehicle equipped with the above automated driving ECU is not limited to a common private passenger car (personally owned vehicles, POV). The vehicle equipped with the automated driving ECU may be a vehicle for rental, a vehicle for manned cab, a vehicle for ridesharing, a cargo vehicle, or a bus. The vehicle equipped with the automated driving ECU may be a right-hand drive vehicle or a left-hand drive vehicle. Furthermore, the traffic environment in which the vehicle travels may be a left-hand traffic environment or a right-hand traffic environment. The automated driving control according to the present disclosure may be optimized as appropriate according to road traffic laws of each country and region, as well as the steering wheel position of the vehicle.

The control units and methods described in the present disclosure may be implemented by a special purpose computer provided by configuring a processor programmed to execute one or more functions embodied by a computer program. Alternatively, the control units and methods described in the present disclosure may be implemented by a dedicated hardware logic circuit. Alternatively, the control units and methods described in the present disclosure may be implemented by one or more special purpose computers provided by configuring one or more processors that executes a computer program in combination with one or more hardware logic circuits. The computer program may be stored on a computer-readable, non-transitory storage medium as instructions executed by a computer.

### (Disclosure of Technical Ideas).

This specification discloses multiple technical ideas described in multiple items listed below. Some items may be described in a multiple dependent form, in which preceding items are referred to by a subsequent term in an alternative form. In addition, some items may be described in a multiple dependent form referring to another multiple dependent form. The item in the multiple dependent form defines multiple technical ideas.

### (Technical Idea 1).

An automated driving control device enabling a host vehicle (Am) to travel under an autonomous traveling control includes:
a vehicle-external recognition unit (62) that recognizes an emergency vehicle approaching the host vehicle; and
a behavior control unit (63) that controls behavior of the host vehicle so as to avoid the emergency vehicle when approach of the emergency vehicle is recognized.

### (Technical Idea 2).

An automated driving control device enabling a host vehicle (Am) to travel under an autonomous traveling control includes:
a vehicle-external recognition unit (62) that recognizes an emergency vehicle approaching the host vehicle; and
a behavior control unit (63) that, when approach of the emergency vehicle is recognized, executes at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.

### (Technical Idea 3).

In the automated driving control device according to technical idea 1 or 2,
when the approach of the emergency vehicle is recognized, the behavior control unit executes a reroute control to reestablish a scheduled travel route of the host vehicle so as to avoid the emergency vehicle,
the automated driving control device further including:
   a notification execution unit (71) that, when rerouting leads to a delay in an estimated time of arrival at a destination, makes an inquiry to an occupant of the host vehicle about whether or not to permit execution of the rerouting.

### (Technical Idea 4).

In the automated driving control device according to technical idea 1:
when the approach of the emergency vehicle is recognized, the behavior control unit executes at least one of: a stop control to stop the host vehicle at a position away from the emergency vehicle by a given distance or more; and a low-speed travel control to suppress traveling speed of the host vehicle.

### (Technical Idea 5).

In the automated driving control device according to technical idea 2 or 4:
prior to starting the stop control or the low-speed travel control, the behavior control unit moves the host vehicle into a non-congested lane where no different vehicle is present or the number of different vehicles is smaller than in a host vehicle lane.

### (Technical Idea 6).

The automated driving control device according to any one of technical ideas 2, 4 and 5 further includes:
a notification execution unit (71) that notifies an occupant of the host vehicle about time information related to the stop control or the low-speed travel control.

### (Technical Idea 7).

In the automated driving control device according to any one of technical ideas 2 and 4 to 6:
when a different vehicle is present around the host vehicle, the behavior control unit executes a reroute control to reestablish a scheduled travel route of the host vehicle so as to avoid the emergency vehicle, preferentially over the stop control and the low-speed travel control.

### (Technical Idea 8).

The automated driving control device according to any one of technical ideas 2 and 4 to 7 further includes:
a notification execution unit (71) that, prior to starting the stop control and the low-speed travel control, notifies an outside of the host vehicle about information related to the emergency vehicle.

### (Technical Idea 9).

In the automated driving control device according to any one of technical ideas 1 to 8:
the vehicle-external recognition unit estimates a disappearance position at which the emergency vehicle stopped sounding siren sound; and
when the approach of the emergency vehicle is recognized, the behavior control unit executes a reroute control to reestablish a scheduled travel route so as to avoid an estimated travel route of the emergency vehicle such that the scheduled travel route is reestablished so as to avoid an area within a given distance from the disappearance position.

### (Technical Idea 10).

In the automated driving control device according to any one of technical ideas 1 to 9:
the vehicle-external recognition unit estimates a disappearance position at which the emergency vehicle stopped sounding siren sound; and
when the approach of the emergency vehicle is recognized, the behavior control unit executes a low-speed travel control to suppress traveling speed of the host vehicle and continues the low-speed travel control until the host vehicle moves out of an avoidance area that is set based on the disappearance position.

### (Technical Idea 11).

In the automated driving control device according to any one of technical ideas 1 to 10:
based on emergency warning in a form of speech broadcasted around the host vehicle, the vehicle-external recognition unit recognizes content of the emergency warning,
the automated driving control device further including:
   a notification execution unit (71) that notifies an occupant of the host vehicle about the content of the emergency warning.

### (Technical Idea 12).

In the automated driving control device according to technical idea 11:
when the same content as the emergency warning has been already notified based on emergency information acquired via a path different than the vehicle-external recognition unit, the notification execution unit stops a notification that is based on the emergency warning.

### (Technical Idea 13).

In the automated driving control device according to technical idea 11 or 12:
when the emergency warning is recognized by the vehicle-external recognition unit, the notification execution unit makes a proposal to the occupant to set a destination of the host vehicle to an evacuation destination corresponding to the content of the emergency warning.

### (Technical Idea 14).

In the automated driving control device according to any one of technical ideas 1 to 13:
by using sound data collected by a vehicle-external sound detection unit (32) mounted to the host vehicle, the vehicle-external recognition unit executes a first detection to detect presence of the emergency vehicle and a second detection to detect a relative direction to the emergency vehicle in a stepwise manner; and
in a first control executed after the first detection and before the second detection and a second control executed after the second detection, the behavior control unit changes at least one of: a speed target value of the host vehicle; and a steering control amount of the host vehicle.

### (Technical Idea 15).

In the automated driving control device according to technical idea 14:
as the first control, the behavior control unit executes a low-speed travel control to suppress traveling speed of the host vehicle; and
as the second control, the behavior control unit executes a stop control to stop the host vehicle or an evacuation steering control to steer the host vehicle away from the emergency vehicle.

### (Technical Idea 16).

In the automated driving control device according to technical idea 14 or 15:
the behavior control unit executes an in-cabin sound control to reduce sound in a cabin of the host vehicle based on the first detection.

### (Technical Idea 17).

In the automated driving control device according to any one of technical ideas 14 to 16:
the vehicle-external recognition unit further executes a third detection to detect the emergency vehicle by using an image data captured by a vehicle-external camera unit (31) mounted to the host vehicle;
as the first control, the behavior control unit executes a low-speed travel control to suppress traveling speed of the host vehicle;
as the second control executed after the second detection and before the third detection, the behavior control unit executes an offset control within a host vehicle lane or a lane change control to a shoulder lane adjacent to a road shoulder; and
as a third control executed after the third detection, the behavior control unit executes a behavior control corresponding to a relative position of the emergency vehicle.

### (Technical Idea 18).

In the automated driving control device according to any one of technical ideas 1 to 17:
the vehicle-external recognition unit detects an abnormal vehicle sounding abnormal sound by using sound data collected by a vehicle-external sound detection unit (32) mounted to the host vehicle; and
when the abnormal vehicle is detected, the behavior control unit controls behavior of the host vehicle so as to avoid the abnormal vehicle.

### (Technical Idea 19).

In the automated driving control device according to technical idea 18:
the vehicle-external recognition unit uses the sound data to ascertain incoming sound around the host vehicle; and
the behavior control unit executes a control to move the host vehicle to an evacuation site based on detecting the abnormal vehicle and refrain from stopping the host vehicle at the evacuation site where the incoming sound meets a given refraining condition.

### (Technical Idea 20).

In the automated driving control device according to any one of technical ideas 1 to 19:
the vehicle-external recognition unit continues collecting sound with a vehicle-external sound detection unit (32) mounted to the host vehicle even when the host vehicle is parked,
the automated driving control device further including:
   an information providing unit (72) that provides a preset reporting destination with at least one of: sound data collected by the vehicle-external sound detection unit; and analysis information of the sound data.

### (Technical Idea 21).

In the automated driving control device according to technical idea 20:
when screaming around the host vehicle is detected based on the sound data, the vehicle-external recognition unit starts imaging using a vehicle-external camera unit (31) mounted to the host vehicle.

### (Technical Idea 22).

In the automated driving control device according to technical idea 20 or 21:
the vehicle-external recognition unit executes voiceprint analysis on the sound data; and
the information providing unit provides the reporting destination with a result of the voiceprint analysis by the vehicle-external recognition unit as the analysis information.

### (Technical Idea 23).

An automated driving control program enabling a host vehicle (Am) to travel under an autonomous traveling control causes at least one processing unit to execute a process including:
recognizing (S13) an emergency vehicle approaching the host vehicle; and
controlling (S33, S35, S39) behavior of the host vehicle so as to avoid the emergency vehicle when approach of the emergency vehicle is recognized.

### (Technical Idea 24).

An automated driving control program enabling a host vehicle (Am) to travel under an autonomous traveling control causes at least one processing unit to execute a process including:
recognizing (S13) an emergency vehicle approaching the host vehicle; and
when approach of the emergency vehicle is recognized, executing (S33, S35, S39) at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.

## Claims

1. An automated driving control device enabling a host vehicle (Am) to travel under an autonomous traveling control, comprising:
a vehicle-external recognition unit (62) that recognizes an emergency vehicle approaching the host vehicle; and
a behavior control unit (63) that controls behavior of the host vehicle so as to avoid the emergency vehicle when approach of the emergency vehicle is recognized.

2. An automated driving control device enabling a host vehicle (Am) to travel under an autonomous traveling control, comprising:
a vehicle-external recognition unit (62) that recognizes an emergency vehicle approaching the host vehicle; and
a behavior control unit (63) that, when approach of the emergency vehicle is recognized, executes at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.

3. The automated driving control device according to claim 1, wherein:
when the approach of the emergency vehicle is recognized, the behavior control unit executes a reroute control to reestablish a scheduled travel route of the host vehicle so as to avoid the emergency vehicle,
further comprising
a notification execution unit (71) that, when rerouting leads to a delay in an estimated time of arrival at a destination, makes an inquiry to an occupant of the host vehicle about whether or not to permit execution of the rerouting.

4. The automated driving control device according to claim 1, wherein:
when the approach of the emergency vehicle is recognized, the behavior control unit executes at least one of: a stop control to stop the host vehicle at a position away from the emergency vehicle by a given distance or more; and a low-speed travel control to suppress traveling speed of the host vehicle.

5. The automated driving control device according to claim 4, wherein:
prior to starting the stop control or the low-speed travel control, the behavior control unit moves the host vehicle into a non-congested lane where no different vehicle is present or the number of different vehicles is smaller than in a host vehicle lane.

6. The automated driving control device according to claim 4, further comprising
a notification execution unit (71) that notifies an occupant of the host vehicle about time information related to the stop control or the low-speed travel control.

7. The automated driving control device according to claim 4, wherein:
when a different vehicle is present around the host vehicle, the behavior control unit executes a reroute control to reestablish a scheduled travel route of the host vehicle so as to avoid the emergency vehicle, preferentially over the stop control and the low-speed travel control.

8. The automated driving control device according to claim 4, further comprising
a notification execution unit (71) that, prior to starting the stop control and the low-speed travel control, notifies an outside of the host vehicle about information related to the emergency vehicle.

9. The automated driving control device according to claim 1, wherein:
the vehicle-external recognition unit estimates a disappearance position at which the emergency vehicle stopped sounding siren sound; and
when the approach of the emergency vehicle is recognized, the behavior control unit executes a reroute control to reestablish a scheduled travel route so as to avoid an estimated travel route of the emergency vehicle such that the scheduled travel route is reestablished so as to avoid an area within a given distance from the disappearance position.

10. The automated driving control device according to claim 1, wherein:
the vehicle-external recognition unit estimates a disappearance position at which the emergency vehicle stopped sounding siren sound; and
when the approach of the emergency vehicle is recognized, the behavior control unit executes a low-speed travel control to suppress traveling speed of the host vehicle and continues the low-speed travel control until the host vehicle moves out of an avoidance area that is set based on the disappearance position.

11. The automated driving control device according to claim 1 or 2, wherein
based on emergency warning in a form of speech broadcasted around the host vehicle, the vehicle-external recognition unit recognizes content of the emergency warning,
further comprising
a notification execution unit (71) that notifies an occupant of the host vehicle about the content of the emergency warning.

12. The automated driving control device according to claim 11, wherein:
when the same content as the emergency warning has been already notified based on emergency information acquired via a path different than the vehicle-external recognition unit, the notification execution unit stops a notification that is based on the emergency warning.

13. The automated driving control device according to claim 11, wherein:
when the emergency warning is recognized by the vehicle-external recognition unit, the notification execution unit makes a proposal to the occupant to set a destination of the host vehicle to an evacuation destination corresponding to the content of the emergency warning.

14. The automated driving control device according to claim 1, wherein:
by using sound data collected by a vehicle-external sound detection unit (32) mounted to the host vehicle, the vehicle-external recognition unit executes a first detection to detect presence of the emergency vehicle and a second detection to detect a relative direction to the emergency vehicle in a stepwise manner; and
in a first control executed after the first detection and before the second detection and a second control executed after the second detection, the behavior control unit changes at least one of: a speed target value of the host vehicle; and a steering control amount of the host vehicle.

15. The automated driving control device according to claim 14, wherein:
as the first control, the behavior control unit executes a low-speed travel control to suppress traveling speed of the host vehicle; and
as the second control, the behavior control unit executes a stop control to stop the host vehicle or an evacuation steering control to steer the host vehicle away from the emergency vehicle.

16. The automated driving control device according to claim 14 or 15, wherein:
the behavior control unit executes an in-cabin sound control to reduce sound in a cabin of the host vehicle based on the first detection.

17. The automated driving control device according to claim 14, wherein:
the vehicle-external recognition unit further executes a third detection to detect the emergency vehicle by using an image data captured by a vehicle-external camera unit (31) mounted to the host vehicle;
as the first control, the behavior control unit executes a low-speed travel control to suppress traveling speed of the host vehicle;
as the second control executed after the second detection and before the third detection, the behavior control unit executes an offset control within a host vehicle lane or a lane change control to a shoulder lane adjacent to a road shoulder; and
as a third control executed after the third detection, the behavior control unit executes a behavior control corresponding to a relative position of the emergency vehicle.

18. The automated driving control device according to claim 1 or 2, wherein:
the vehicle-external recognition unit detects an abnormal vehicle sounding abnormal sound by using sound data collected by a vehicle-external sound detection unit (32) mounted to the host vehicle; and
when the abnormal vehicle is detected, the behavior control unit controls behavior of the host vehicle so as to avoid the abnormal vehicle.

19. The automated driving control device according to claim 18, wherein:
the vehicle-external recognition unit uses the sound data to ascertain incoming sound around the host vehicle; and
the behavior control unit executes a control to move the host vehicle to an evacuation site based on detecting the abnormal vehicle and refrain from stopping the host vehicle at the evacuation site where the incoming sound meets a given refraining condition.

20. The automated driving control device according to claim 1 or 2, wherein:
the vehicle-external recognition unit continues collecting sound with a vehicle-external sound detection unit (32) mounted to the host vehicle even when the host vehicle is parked,
further comprising
an information providing unit (72) that provides a preset reporting destination with at least one of: sound data collected by the vehicle-external sound detection unit; and analysis information of the sound data.

21. The automated driving control device according to claim 20, wherein:
when screaming around the host vehicle is detected based on the sound data, the vehicle-external recognition unit starts imaging using a vehicle-external camera unit (31) mounted to the host vehicle.

22. The automated driving control device according to claim 20, wherein:
the vehicle-external recognition unit executes voiceprint analysis on the sound data; and
the information providing unit provides the reporting destination with a result of the voiceprint analysis by the vehicle-external recognition unit as the analysis information.

23. An automated driving control method enabling a host vehicle (Am) to travel under an autonomous traveling control,
comprising a process executed by at least one processing unit, the process including steps of:
recognizing (S13) an emergency vehicle approaching the host vehicle; and
controlling (S33, S35, S39) behavior of the host vehicle so as to avoid the emergency vehicle when approach of the emergency vehicle is recognized.

24. An automated driving control method enabling a host vehicle (Am) to travel under an autonomous traveling control,
comprising a process executed by at least one processing unit, the process including steps of:
recognizing (S13) an emergency vehicle approaching the host vehicle; and
when approach of the emergency vehicle is recognized, executing (S33, S35, S39) at least one of: a stop control to stop the host vehicle at a position away from the emergency vehicle by a given distance or more; a low-speed travel control to suppress traveling speed of the host vehicle; and a reroute control to reestablish a scheduled travel route of the host vehicle so as to avoid the emergency vehicle.
